Europäisches Patentamt

European Patent Office

Office européen des brevets

(11) Publication number: **0 280 794**
**A1**

# EUROPEAN PATENT APPLICATION

(21) Application number: **87200381.9**

(51) Int. Cl.⁴: **A47J 31/22**

(22) Date of filing: **03.03.87**

(43) Date of publication of application:
**07.09.88 Bulletin 88/36**

(84) Designated Contracting States:
**CH DE FR GB LI NL**

(71) Applicant: **ANIMO B.V.**
**Amsterdamseweg 22**
**NL-3812 RS Amersfoort(NL)**

(72) Inventor: **Kroon, Gerardus**

**deceased(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) Process and apparatus for brewing hot beverages.

(57) A method for preparing hot drinks in measured quantities, a dry ingredient and water being mixed when measuring and subsequently a measured quantity of the drink is drawn from the mixture spread over a filter.

The apparatus comprises a rotating filter for spreading the mixture.

FIG. 1

## Apparatus for the preparation of drinks

The apparatus according to claim 1 with as characterizing part a method for preparing a drink in measured quantities by extracting a dry basic ingredient, such as ground coffee or tea leaves, and using hot water, a measured quantity of the basic ingredient and the hot water being received in a special strainer and the depleted basic ingredient being flung out after the extract has passed. The apparatus is also suited for the application of the method and, particularly, it is an apparatus for a drinks dispenser, with which each time a quantity of e.g. ten cups can be prepared, also an apparatus for the catering industry, canteens and large offices etc.

The apparatus aims to provide a method of the type stated in the preamble, in which the consumed basic ingredient is discharged from the special strainer in a simple manner.

According to the invention, the special strainer, which is mounted on a motor, is applied to discharge the depleted basic ingredient, after which the apparatus is ready for a next quantity. According to a favourable embodiment of the apparatus the collecting space for the depleted basic ingredient comprises a mounted, circular channel (8), which is mounted on the housing (1) for the extract, and the special filter ensures that the depleted basic ingredient is discharged into said channel.

The drawing schematically shows an embodiment of the apparatus for the preparation of drinks and other constructive measures are advanced in the claims.

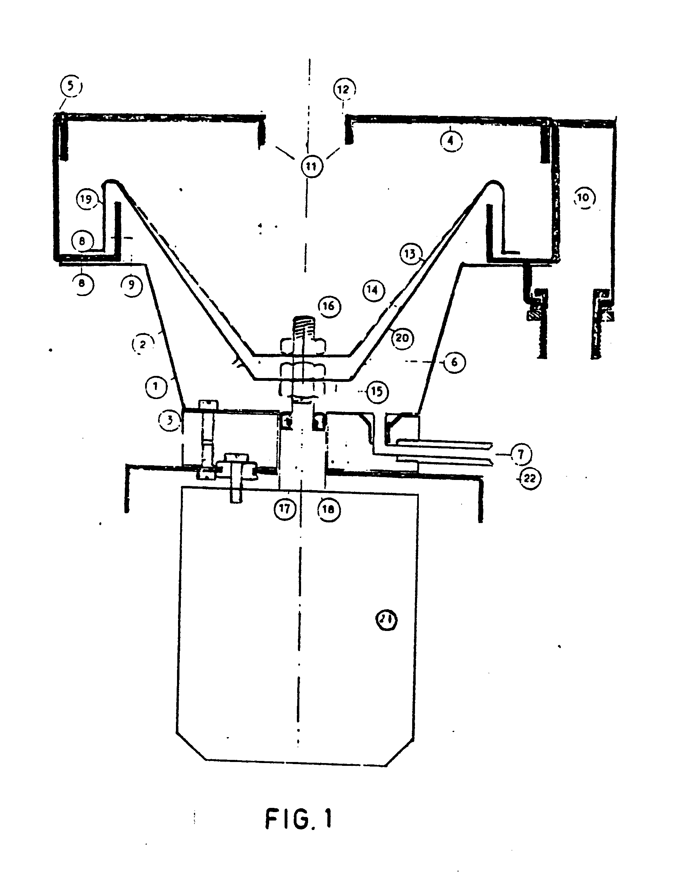

Fig. 1 is a vertical section of the apparatus.

Fig. 1. The represented apparatus has particularly been devised for a drinks dispenser, with which e.g. 10 cups can be prepared, and also as an apparatus for the catering industry, canteens, large offices etc. for extracting dry basic ingredient for the preparation of drinks using hot water.

In such a dispenser machine, the further parts of which have not been represented here, a number of the drawn apparatuses for the preparation of various drinks can be accomodated, e.g. coffee, hot cocoa, soups, lemonades etc. The apparatus can also be produced as units that can be coupled as desired, devised as table-top models.

The apparatus comprises a motor (21), onto which a housing (1) with the discharge channel (8) for the depleted liquid is mounted, the shaft (16) projecting through the housing, while the special filter (13) is mounted onto the shaft with a slight clearance, so that it can freely rotate therein.

The discharge channel (8) comprises a lid (4) that fits into the outer wall. Through this lid (4) the basic ingredient and the hot water are supplied by state of the art means (11 and 12).

The discharge housing can discharge the collected drink to an insolating pot from which the cups can be filled, or to a storage tank with e.g. a content of 25 to 50 cups, from which the drink can be drained through a tap, which is either or not concentrically operated or coin-operated.

The described apparatus is operated as follows: when switching the apparatus on, e.g. by inserting a coin into the machine or by pressing a selector button, a measured quantity of basic ingredient, e.g. ground coffe, and hot water, are supplied through a supply tube in the lid (11, 12). The measurement and supply means applied to perform this can be of a conventional construction. Immediately after the basic ingredient and the hot water have arrived in the special filter (13), the filter begins transporting the extract through the discharge opening (7) to the isolating pot, jug or storage tank and special filter (13) is replenished with hot water up to the measured quantity. After a short break so as to let the filter empty itself, the motor (21) is switched on and the depleted basic ingredient is discharged through the circular channel (8) and can be disposed of in a subjoined bin or by means of a tube into the sewer. The apparatus can start again and produce the quantity set by means of the selector button.

By adjusting the size of the filter (13) the quantity of cups per extraction can be controlled, e.g. 4 to 8, 8 to 16, etc. With the selector button, the number of cups can be chosen from e.g. 4 to up to 50 cups.

### Claims

1. The apparatus is characterized in that the basic ingredient, e.g. ground coffee, and the hot water are mixed when measuring. This causes the extraction process to begin right after switching (the apparatus) on. Equally such moistening provides for a swelling of the basic ingredient particles, as well as agglomerating or sticking together of the relatively fine basic ingredient particles, on account of which the system is either not liable to flush fine particles through the filter or is insensitive to type, nature or grinding mode of the coffee, tea or other basic ingredient.

2. The apparatus is characterized in that the mixing ratio of the basic ingredient, e.g. ground coffee, and hot water is such that complete moistening of the basic ingredient occurs, that the mixture has specific physical flow properties, so that in relation to the specific form of the conical filter, and the location of the perforations, the mixture is optimally distributed over the available space. By discharging a relatively small quantity of fluid through the specifically applied perforations in the filter, an optimum deposition of the moistened, swollen and agglomerated basic ingredient particles is attained. Said optimum deposition is defined as the constant thickness of the layer of deposited basic ingredient on the perforated surface with the special provisions that the perforated surface with respect to the interior of the deposition always has a distance equal to the uniform thickness of the deposition layer. Attaining the uniform layer thickness of the deposition is also attained by making use of the centrifugal forces occurring during a short period by slowly rotating the filter (13).

3. The apparatus is characterized in that after the uniform deposition a period of time is provided for continuing swelling and extraction before more hot water is supplied to the filter, resulting in a higher extraction efficiency or an improvement in flavour and a reduction of the consumption of the basic ingredient per unit of the extraction product.

4. The apparatus is characterized in that in order to discharge the extract-concentrate resulting from the period of time, a quantity of water is fed in a specific way into the deposited, moistened basic ingredient, so that the deposited layer of the basic ingredient is not or minimally disturbed, resulting in optimum recovery of the extract-concentrate from the basic ingredient.

5. The apparatus is characterized in that after extracting and recovering the extract-concentrate, the remaining, relatively dry and depleted basic ingredient is removed from the conical filter by having the filter rotate fast, causing the basic ingredient to be removed almost tangentially over the conical edge of the filter into a discharge channel.

6. The apparatus is characterized in that the entire device is an assembly including the hot water supply means and encased by an insulating housing. This insulating housing and the devices contained therein are kept at an elevated temperature by the hot water supply means and the hot water circulation system provided therewith. Due to this provision individual heating of the devices is superfluous, and the temperature of the devices and the water at the supply point required for optimum operation is attained.

7. The invention is characterized in that the optimum process for various quantities of extract to be prepared is possible, as well as it being applied for various types of extract, and possibly constructive variables and the process according to the principle being effectively adapted to the basic ingredients to be treated and the quantities of extract to be prepared.

8. The apparatus is characterized in that it distinguishes itself over other apparatuses on account of the above features and their combination, resulting in a highly functional and as far as its construction is concerned relatively simple apparatus, in which, also by applying modern operation techniques, an optimum and automatic operation is attained.

9. The apparatus is characterized in that it provides, by a fully automatic and relatively fast operation, an apparatus for the preparation of extracts from basic ingredients such as coffee, tea and the like, attaining a first-class finished product as far as taste and consistency are concerned, at a high rate of basic ingredient efficiency.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | NL-A-7 214 854 (N.V. KROONMATIC) <br> * Whole document * <br> --- | 1-9 | A 47 J 31/22 |
| X | DE-A-2 524 610 (MEYER) <br> * Whole document * <br> ----- | 1-9 | |

TECHNICAL FIELDS SEARCHED (Int. Cl.4)

A 47 J

The present search report has been drawn up for all claims

| Place of search | Date of completion of the search | Examiner |
|---|---|---|
| THE HAGUE | 07-06-1988 | SCHARTZ J. |

EPO FORM 1503 03.82 (P0401)